# EUROPÄISCHE PATENTANMELDUNG

(11) **EP 1 010 914 A2**
(43) Veröffentlichungstag der Anmeldung: **21.06.2000**
(21) Anmeldenummer: 99122468.4
(22) Anmeldetag: 11.11.1999
(51) Int. Cl.: F16D 65/10, F16D 65/12

(54) **Bremsscheibe oder Bremstrommel für ein Kraftfahrzeug**

(30) Priorität: 14.12.1998 DE 19857551
(71) Anmelder: Bayerische Motoren Werke Aktiengesellschaft, 80809 München (DE)
(72) Erfinder: Hausmann, Norbert, 80809 München (DE)

(57) **Zusammenfassung**

Die Erfindung betrifft eine Bremsscheibe oder Bremstrommel für ein Kraftfahrzeug, die aus einer korrosionsbeständigen Eisen-Aluminium-Legierung gebildet ist, wobei der Anteil des Aluminiums in der Legierung bei 10 bis 30 Gewichtsprozenten liegt.

## Beschreibung

Die Erfindung betrifft eine Bremsscheibe oder Bremstrommel für ein Kraftfahrzeug, insbesondere für einen Personenkraftwagen, die aus einer korrosionsbeständigen Legierung auf Eisenbasis gebildet ist.

Es ist bekannt, daß eine Bremsscheibe bzw. Bremstrommel verschiedenste Anforderungen erfüllen muß. So soll die Bremsscheibe bzw. Bremstrommel einerseits über eine ausreichende Formsteifigkeit und Verschleißfestigkeit verfügen, damit sie den maximal auftretenden Kräften widerstehen kann. Andererseits soll der für die Bremsscheibe bzw. Bremstrommel verwendete Werkstoff eine so ausreichend hohe Zähigkeit besitzen, daß die Bildung von Rissen oder Ausbrüchen verhindert ist. Ferner soll die Bremsscheibe bzw. Bremstrommel eine gute Wärmeleitfähigkeit besitzen, thermisch belastbar und korrosionsbeständig sein. Gleichzeitig soll die Bremsscheibe bzw. Bremstrommel möglichst kostengünstig herstellbar sein. Da zwischen diesen Anforderungen Zielkonflikte bestehen, sind aus dem Stand der Technik verschiedenste Lösungen hervorgegangen, bei denen durch eine gezielte Werkstoffauswahl und, sofern erforderlich, durch eine entsprechende Formgebung der Bremsscheibe bzw. Bremstrommel diese sich teilweise entgegenstehenden Forderungen erfüllt werden sollen.

So werden Bremsscheiben und Bremstrommeln aus Kostengründen häufig aus Gußeisen gefertigt. Aus Gußeisen gefertigte Bremsscheiben und Bremstrommeln zeichnen sich zwar durch eine ausreichend hohe Festigkeit und Zähigkeit aus, verfügen jedoch nicht über eine besonders hohe Korrosionsbeständigkeit. Ferner sind aus Gußeisen gefertigte Bremsscheiben und Bremstrommeln thermisch nicht sehr hoch belastbar, da das perlitische Gefüge von Gußeisen bei Temperaturen größer 600°C erweicht und sich bei Temperaturen oberhalb 723°C unter Veränderung seines Volumens in eine andere Kristallstruktur umwandelt. Aus diesem Grund müssen aus Gußeisen gefertigte Bremsscheiben und Bremstrommeln entsprechend groß dimensioniert sein, damit sie nicht über diese kritischen Temperaturen erwärmt werden. Ferner wird die Wärmeabgabe dieser Bremsscheiben und Bremstrommeln durch eine entsprechende Formgebung verbessert. So ist aus der EP 0 318 687 A1 die Verwendung einer Gußeisensorte mit perlitischem Grundgefüge für Bremskörper, Bremsscheiben und Bremsringe bekannt, der zur Verbesserung der Wärmeleitfähigkeit bis zu 2,3 Gewichtsprozente Silizium beigemengt sind. Zusätzlich wird die Wärmeabgabe des Bremskörpers, der Bremsscheibe bzw. des Bremsringes mit Hilfe von Luftschächten verbessert. Zwar wird durch diese Maßnahmen die thermische Belastbarkeit verbessert, die Korrosionsbeständigkeit der Bremsscheibe bzw. der Bremstrommel ist bei Verwendung dieses Werkstoffes jedoch gering.

Um die Korrosionsbeständigkeit zu verbessern und die Kosten bei der Herstellung zu verringern, schlägt die DE 195 05 724 A1 vor, Bremsscheiben und Bremstrommeln aus Aluminiumlegierungen zu fertigen. Durch die Verwendung von Aluminiumlegierungen können die Bremsscheiben und Bremstrommeln durch Druckgußverfahren gefertigt werden, bei denen die geforderten Oberflächen und Maßtoleranzen bereits durch den Guß eingehalten werden können. Ferner ist durch die Bildung von Aluminiumoxid an den Oberflächen der Bremsscheibe bzw. Bremstrommel deren Korrosionsbeständigkeit verbessert. Da die Aluminiumlegierung jedoch nicht über eine hohe Verschleißfestigkeit verfügt, müssen der Aluminiumlegierung zusätzlich Hartstoffpartikel aus Keramik beigemengt werden, die die Herstellung, insbesondere die spanende Bearbeitung der Bremsfläche erschweren.

Des weiteren ist die Verwendung von mit Kohlefasern verstärkten Verbundwerkstoffen für die Herstellung von Bremsscheiben bekannt, die besonders hohen thermischen Belastungen, wie sie beispielsweise im Rennsport auftreten, widerstehen können. Aus derartigen Verbundwerkstoffen gefertigte Bremsscheiben können kurzzeitig auf Temperaturen von bis 1000 °C erhitzt werden, ohne daß die Bremsscheiben beschädigt werden. So beschreibt die EP 0 719 957 A1 eine Bremsscheibe, bei der die Bremsfläche aus einem mit Kohlefasern verstärkten Verbundwerkstoff gefertigt ist. Aufgrund der hohen auftretenden thermischen Belastungen sind auch die Bremsbeläge aus einem mit Kohlefasern verstärkten Verbundwerkstoff gefertigt. Da die Herstellungskosten für derartige Bremsscheiben sehr hoch sind, eignen sie sich nicht zur Verwendung bei Personenkraftwagen, die in großen Stückzahlen gefertigt werden. Ein weiterer Nachteil besteht darin, daß der Reibkoeffizient der aus mit Kohlefasern verstärkten Verbundwerkstoff gefertigten Bremsscheibe temperaturabhängig ist, so daß die Bremsleistung während des Bremsvorganges schwankt.

Ferner sind Bremsacheiben aus Keramikwerkstoffen bekannt, die sich einerseits durch große Verschleißfestigkeit und andererseits durch hohe thermische Belastbarkeit auszeichnen. So beschreiben beispielsweise die EP 0 201 760 B2 oder die EP 0 674 114 A1 jeweils eine aus einem Keramikwerkstoff gefertigte Bremsscheibe, deren Bremsfläche aus einer einstückigen Keramikscheibe gebildet ist. Auch hier besteht der Nachteil, daß die Herstellung der Bremsscheibe äußerst kostspielig ist und sich der Reibkoeffizient der Bremsscheibe in Abhängigkeit von der Temperatur ändert.

Schließlich werden Bremsscheiben verwendet, die aus rostfreien Stahllegierungen, wie sie beispielsweise in der DE 35 15 198 A1 angegeben sind, gefertigt sind. Diese Bremsscheiben zeichnen sich durch hohe Formsteifigkeit, Verschleißfestigkeit sowie hohe Korrosionsbeständigkeit aus, sind jedoch aufwendig in ihrer Herstellung und aufgrund der Legierungszusätze nur bedingt thermisch belastbar. Auch die DE 35 15 198 C2 beschreibt eine aus einer rostfreien Legierung auf Eisenbasis gefertigte Bremsscheibe. Der Legierung sind als Legierungsbestandteile insbesondere die Elemente Kohlenstoff und Molybdän, mit jeweils einem Anteil von bis zu 1 Gewichtsprozent, sowie Chrom, mit einem Anteil von bis zu 8 Gewichtsprozenten, beigemengt. Durch den Kohlenstoff wird die Formsteifigkeit und die Verschleißfestigkeit erhöht. Der Molybdänzusatz erhöht die Temperaturbeständigkeit, während der Chromzusatz die Korrosionsbeständigkeit durch Bildung einer Chromoxidschicht an der Oberfläche der Bremsscheibe bewirkt. Bei dieser bekannten Bremsscheibe besteht jedoch das Problem, daß durch den hohen Chromgehalt die thermische Belastbarkeit auf einen Temperaturbereich von etwa 450 bis 550°C beschränkt ist. Wird die Bremsscheibe auf höhere Temperaturen erwärmt, bilden sich an den Korngrenzen chromreiche Carbide (Cr, Fe)₂₃C₆, während gleichzeitig das Gefüge nahe den Korngrenzen an Chrom verarmt und dadurch Bereiche entstehen, die zur interkristallinen Korrosion neigen. Um eine Erwärmung der Bremsscheibe auf diese hohen Temperaturen zu vermeiden, muß deshalb die Masse der Bremsscheibe so gewählt sein, daß die durchschnittliche Temperatur im Gefüge diesen Temperaturwert nicht übersteigt.

Es ist Aufgabe der Erfindung, eine aus einer korrosionsbeständigen Legierung auf Eisenbasis gebildete Bremsscheibe bzw. Bremstrommel anzugeben, die einfach herzustellen ist und bei geringem Gewicht und Verschleiß eine hohe Temperatur- und Formbeständigkeit besitzt.

Diese Aufgabe wird durch die Merkmale des ersten Anspruchs gelöst. Vorteilhafte Weiterbildungen ergeben sich aus den Unteransprüchen.

Bei der erfindungsgemäßen Bremsscheibe bzw. Bremstrommel bildet das Aluminium mit dem Eisen, das mit einem Anteil von 90 bis 70 Gewichtsprozenten vorliegt, ein feinkörniges Gefüge aus intermetallischen Eisen-Aluminid-Phasen aus, die aus Fe₃Al und FeAl bestehen. Durch das feinkörnige Gefüge wird das Wandern und Springen von Versetzungen beschränkt, deren Bewegungen entlang der Gleitebenen durch die Korngrenzen behindert werden, so daß die Bremsscheibe bzw. Bremstrommel eine verglichen mit reinen Eisen- oder Aluminiumlegierungen hohe Formsteifigkeit besitzt. Ferner bildet das Aluminium an der Oberfläche der Bremsscheibe bzw. der Bremstrommel mit dem Luftsauerstoff eine Aluminiumoxidschicht, die eine Korrosion der Bremsscheibe bzw. der Bremstrommel wirksam verhindert und sich selbständig erneuert, wenn sie während des Bremsvorganges entfernt oder verletzt wird. Ferner können diese Eisen-Aluminium-Legierungen auf Temperaturen von bis zu 1000°C erwärmt werden, ohne daß eine bleibende Gefügeänderung in der Bremsscheibe bzw. Bremstrommel entsteht, wie sie beispielsweise bei Bremsscheiben oder Bremstrommeln aus Gußeisen auftritt. Da die aus Eisen-Aluminium-Legierungen gefertigte Bremsscheibe bzw. Bremstrommel verglichen mit den aus anderen Werkstoffen auf Eisenbasis gefertigten Bremsscheiben und Bremstrommeln aus den oben genannten Gründen deutlich höhere Temperaturen erträgt, kann die erfindungsgemäße Bremsscheibe bzw. Bremstrommel verglichen mit den bekannten Bremskörpern kleiner und damit auch leichter dimensioniert werden.

Aufgrund der hohen spezifischen Wärmeleitfähigkeit der Eisen-Aluminium-Legierung ist die Bremsscheibe bzw. Bremstrommel in der Lage, beim Bremsen entstehende Wärmemengen schnell aufzunehmen und abzuführen, so daß die Bremsscheibe bzw. Bremstrommel verglichen mit Bremsscheiben oder Bremstrommeln aus herkömmlichen korrosionsbeständigen Eisenlegierungen kleiner dimensioniert und leichter ausgebildet sein kann.

Die Ausgestaltung der Erfindung nach Anspruch 2 ist vorteilhaft, da sich das Aluminium bei diesem Legierungsverhältnis in einem stöchiometrischen Verhältnis zum Eisen befindet und vorrangig ein aus der intermetallischen Fe₃Al-Phase bestehendes Gefüge mit sehr feiner Körnung bildet, durch das die Festigkeit der Bremsscheibe bzw. Bremstrommel besonders hoch ist.

Um die Zähigkeit der Eisen-Aluminium-Legierung zu erhöhen, wird die Weiterbildung nach Anspruch 3 vorgeschlagen. Durch die Zugabe von Chrom wird die Wasserstoffversprödung des Gefüges, die bei einer reinen Eisen-Aluminium-Legierung aufgrund des hohen Anteils an Aluminium entsteht, das mit dem Wasserstoff des sich auf der Oberfläche niederschlagenden Wassers reagiert, gemildert und dadurch die Zähigkeit des Gefüges erhöht. Ferner stabilisiert das Chrom die intermetallischen Phasen und verhindert eine Umwandlung der intermetallischen Phasen in die sich durch höhere Sprödigkeit auszeichnende α-Mischkristall-Phase, in der das Aluminium im Eisengitter gelöst ist. Gleichzeitig wird durch die Zugabe von Chrom die Korrosionsbeständigkeit weiter verbessert, da das Legierungselement Chrom, ähnlich dem Aluminium, mit dem Luftsauerstoff auf der Oberfläche der Bremsscheibe bzw. Bremstrommel eine schützende Oxidschicht bildet. Der Anteil des Chroms in der Legierung liegt vorzugsweise bei 2 bis 6 Gewichtsprozenten, da sich in diesem Bereich die Zähigkeit des Werkstoffes, verglichen mit der Zähigkeit einer reinen Eisen-Aluminium-Legierung, nahezu verdoppelt, bei deutlich höherem Chromgehalt die Sprödigkeit jedoch wieder zunimmt.

Des weiteren kann die Festigkeit der Eisen-Aluminium-Legierung durch die Zugabe von Kohlenstoff gesteigert werden, wie Anspruch 4 vorschlägt Dabei sollte der Kohlenstoffanteil 0,2 Gewichtsprozent nicht übersteigen, um die Bildung von groben Eisen-Aluminium-Carbiden zu vermeiden, die die Festigkeit wieder verringern würden.

Sind der Eisen-Aluminium-Legierung sowohl Chrom als auch Kohlenstoff beigemengt, reagiert der Kohlenstoff aufgrund der verglichen mit dem Aluminium größeren Affinität des Chroms zu Kohlenstoff mit dem Chrom unter Bildung von im Gefüge fein verteilten Chromcarbiden. Die fein verteilten Chromcarbide lagern sich an den Korngrenzen an und verhindern so die Wanderung von Versetzungen, wodurch die Festigkeit der Eisen-Aluminium-Legierung gesteigert wird.

Durch die Ausgestaltung der Erfindung nach Anspruch 5 bzw. 6 wird die Belastbarkeit gesteigert Diese Legierungselemente lagern sich in den intermetallischen Phasen als intermetallische Ausscheidungen ab, die das Wandern von Versetzungen verhindern und so die Kriechfestigkeit des Werkatoffes erhöhen. Zu diesem Zweck reicht bereits ein Anteil von 1 Gewichtsprozent dieser Mikrolegierungselemente. Ein vergleichbarer Effekt wird auch durch die Zugabe von Niobium und Molybdän erreicht. Enthält die Eisen-Aluminium-Legierung zusätzlich Kohlenstoff, reagieren die Mikroelemente mit dem Kohlenstoff unter Bildung von Carbiden, die fein verteilt im Gefüge angeordnet sind und die Festigkeit des Werkstoffes steigern.

Ferner kann der Eisen-Aluminium-Legierung Bor zugesetzt werden, das mit den anderen Legierungselementen unter Bildung von metallischen Boriden reagiert, die sich gleichfalls an die Korngrenzen der intermetallischen Phasen anlagern und das Wandern von Versetzungen verhindern.

Als Herstellungsverfahren eignen sich insbesondere Gießverfahren, da die Bremsscheiben bzw. Bremstrommeln aufgrund des hohen Aluminiumanteiles unter Einhaltung enger Toleranzen gut gießbar sind und deshalb aufwendige Nachbearbeitungsschritte größtenteils entfallen können.

Ferner können die Bremsscheiben bzw. die Bremstrommeln durch pulvermetallurgische Verfahren hergestellt werden, bei denen die Legierungselemente als Pulver einzeln oder bereits vorlegiert gemischt, in Formen gepreßt und anschließend gesintert werden. Bei diesen Verfahren besteht der Vorteil, daß die Maßgenauigkeit verglichen mit Gießverfahren besonders hoch ist, so daß aufwendige spanende Nachbearbeitungsschritte nahezu entfallen können.

## Patentansprüche

1. Bremsscheibe oder Bremstrommel für ein Kraftfahrzeug, insbesondere für einen Personenkraftwagen, die aus einer korrosionsbeständigen Legierung auf Eisenbasis gebildet ist,
**dadurch gekennzeichnet,** daß die Legierung eine Eisen-Aluminium-Legierung mit einem Anteil von 10 bis 30 Gewichtsprozenten Aluminium ist.

2. Bremsscheibe oder Bremstrommel nach Anspruch 1,
**dadurch gekennzeichnet**, daß die Eisen-Aluminium-Legierung einen Anteil von etwa 13,8 Gewichtsprozenten Aluminium enthält.

3. Bremsscheibe oder Bremstrommel nach Anspruch 1 oder 2,
**dadurch gekennzeichnet,** daß die Eisen-Aluminium-Legierung einen Anteil von bis zu 7 Gewichtsprozenten Chrom enthält.

4. Bremsscheibe oder Bremstrommel nach Anspruch 1, 2 oder 3,
**dadurch gekennzeichnet**, daß die Eisen-Aluminium-Legierung einen Anteil von bis zu 0,2 Gewichtsprozent Kohlenstoff enthält.

5. Bremsscheibe oder Bremstrommel nach einem der Ansprüche 1 bis 4,
**dadurch gekennzeichnet** daß die Eisen-Aluminium-Legierung einen Anteil von bis zu 1 Gewichtsprozent mindestens eines die Kriechfestigkeit der Bremsscheibe bzw. der Bremstrommel erhöhenden Mikrolegierungselementes enthält.

6. Bremsscheibe oder Bremstrommel nach Anspruch 5,
**dadurch gekennzeichnet,** daß die Eisen-Aluminium-Legierung zum Erhöhen der Kriechfestigkeit einen Anteil von bis zu 1 Gewichtsprozent Vanadium, Zirkonium und/oder Bor enthält.

7. Bremsscheibe oder Bremstrommel nach einem der vorhergehenden Ansprüche,
**dadurch gekennzeichnet,** daß die Bremsscheibe bzw. die Bremstrommel durch ein Gießverfahren hergestellt worden ist.

8. Bremsscheibe oder Bremstrommel nach einem der Ansprüche 1 bis 6,
**dadurch gekennzeichnet,** daß die Bremsscheibe bzw. die Bremstrommel durch ein pulvermetallurgisches Verfahren hergestellt worden ist.
